# EUROPEAN PATENT APPLICATION

(11) **EP 1 650 821 A1**
(43) Date of publication of application: **26.04.2006**
(21) Application number: 03786473.3
(22) Date of filing: 23.12.2003
(51) Int. Cl.: H01M 8/10, H01M 8/12

(54) **ZIRCONIUM DIOXIDE-BASED ELECTRODE-ELECTROLYTE PAIR (VARIANTS), METHOD FOR THE PRODUCTION THEREOF (VARIANTS) AND ORGANOGEL**

(30) Priority: 10.06.2003 RU 2003117114
(71) Applicant: Hilchenko, Galina Vitalevna, Moscow 129343 (RU); Myatiyev, Ata Atayevich, Moscow, 127083 (RU)
(72) Inventor: Hilchenko, Galina Vitalevna, Moscow 129343 (RU); Myatiyev, Ata Atayevich, Moscow, 127083 (RU)
(74) Representative: Henrion, Oliver
(86) International application number: PCT/RU2003/000574
(87) International publication number: WO 2004/109834

(57) **Abstract**

This invention relates to the field of electric power generation by direct transformation of the chemical energy of gaseous fuel to electric power by means of high-temperature solid oxide fuel cells.

The invention can be used for the fabrication of miniaturized thin filmed oxygen sensors, in electrochemical devices for oxygen extraction from air and in catalytic electrochemical devices for waste gas cleaning or hydrocarbon fuels conversion.

The technical objective of the invention is the production of a low-cost electrode-electrolyte pair having an elevated electrochemical efficiency as the most important structural part of a highly efficient, economically advantageous and durable fuel cell. Furthermore, the invention achieves additional objectives.

The achievement of these objectives is exemplified with two electrode-electrolyte pair designs and their fabrication methods, including with the use of a special organogel.

## Description

### Technical field

This invention relates to the field of electric power generation by direct transfomation of the chemical energy of gaseous fuel to electric power by means of high-temperature solid oxide fuel cells.

Additionally, the invention can be used for the fabrication of miniaturized thin filmed oxygen sensors, in electrochemical devices for oxygen extraction from air and in catalytic electrochemical devices for waste gas cleaning or hydrocarbon fuel conversion.

### State of the Art

In the recent years, major attempt has been made world over aimed at the development of high-temperature oxide fuel cells that act as unique devices for the generation of electric power from natural or synthetic gaseous fuels.

A high-temperature fuel cell consists of two porous electrodes having an electronic conductivity type and a dense electrolyte in the space between them having an ionic conductivity type. The gaseous fuel is located at the side of one of the electrodes. The oxidizing agent, typically air, is located at the side of the other electrode.

The most important component of the oxide fuel cell structure that determines the efficiency of electric current generation is the electrode-electrolyte pair. The electrolyte of the fuel cell is typically doped zirconium dioxide which has a good high temperature conductivity of oxygen ions.

The following electrode-electrolyte pairs are known.

Known is an electrode-electrolyte pair wherein, aiming at reducing its electrical resistivity, an electrolyte is used on the basis of scandium-stabilized zirconium dioxide and a sublayer between the cathode and the electrolyte consisting of yttrium- and terbium-doped zirconium dioxide having an electronic conductivity type (US 6207311 A, published 2001).

However, this electrode-electrolyte pair does not achieve the objective of increasing the area of electrochemical contact in the pair and decreasing the electrolyte layer thickness and the negative effect of the surface stress concentrators that cause crack initiation in the electrolyte layer. Further disadvantage of this electrode-electrolyte pair is the high cost of terbium.

In another high-temperature fuel cell (US 5518830 A, published 1996), aiming at reducing the electrical resistivity of its electrode-electrolyte pair, an electrolyte is used on the basis of yttrium-stabilized zirconium dioxide and a sublayer between the cathode and the electrolyte consisting of yttrium- and terbium-doped zirconium dioxide having a p-type of electronic conductivity. Aiming at reducing the electrical resistivity of another electrode-electrolyte pair, an electrolyte is suggested on the basis of yttrium-stabilized zirconium dioxide and a sublayer between the cathode and the electrolyte consisting of titanium-doped zirconium dioxide having an n-type of electronic conductivity.

Disadvantages of said structure are as mentioned for the case above.

Known also is a solid oxide fuel cell with a cathodic and an anodic electrode-electrolyte pairs (RU 2128384 A, published 27.03.99, cl. H 01 M 8/10). The solid electrolyte of the element based on metal-doped zirconium dioxide contacts with the electrode by smooth interpenetration.

Disadvantage of these pairs is the limited area of electrochemical contact at the anodic and the cathodic sides which limits the current generation efficiency of the fuel cell.

Known also are a cathode-electrolyte pair based on yttrium-doped zirconium dioxide and an anode-electrolyte pair based on yttrium-doped zirconium dioxide with a separating buffer sublayer consisting of a fine-grained mixture of powdered electrolyte and cathode materials and a fine-grained mixture of powdered electrolyte and anode materials, respectively (US 5935727 A, published 1999).

Said structure achieves an increase in the electrode and electrolyte contact area.

However, the fabrication of said pair which requires powder sintering at 1350°C unavoidably leads to chemical interaction between the cathode and anode materials, on the one hand, and the electrolyte material, on the other. This interaction results in an increase in the electrical resistivity of the electrolyte to electrode contacts and produces a high level of mechanical stresses in the electrolyte layer that may initiate cracking therein.

Further disadvantage of the above described devices is that the electrolyte of the electrode-electrolyte pair is mainly in the form of a two-dimensional layer on the surface of the porous electrode. This unavoidably results in mechanical stresses due to the roughness-related stress concentrators on the surface of the porous electrode being directed across the electrolyte layer thus drastically increasing the probability of cracking therein. Furthermore, the thinner the electrolyte, the higher the cracking probability.

The following electrode-electrolyte pair fabrication methods are known.

Known is an electrode-electrolyte pair fabrication method by depositing a coating containing water solutions with a polymerizing organic solvent (US 5494700 A, published 1996) comprising the steps of:
■ producing a water solution of zirconium and yttrium nitrates, chlorides or carbonates;
■ mixing said water solution with ethylene glycol to act as a polymerizing agent;
■ adding nitric, hydrochloric, citric or oxalic acid for solution pH optimization;
■ heating said mixture to 25 - 100°C for polymerization and viscosity optimization;
■ depositing said mixture onto the surface of the porous electrode;
■ drying the deposited mixture at about 300°C;
■ high temperature annealing for removal of all the impurities and crystallization of the yttrium-doped zirconium dioxide.

Disadvantages of this method are the strong dependence of the properties of the thus obtained electrolyte layer on the initial mixture polymerization degree and viscosity; poor adhesion to the electrode material; high content of impurities that impair the electrochemical properties of the electrolyte and the electrode-electrolyte pair; poor reproducibility of the method due to the complex chemical processes used for the production of the polymer solution; insufficient adaptability of the method with respect to the choice of electrolyte composition and the material and properties of the electrode.

Known also is an electrode-electrolyte pair fabrication method comprising depositing an organogel coating consisting of fine-grained particles of yttrium-doped zirconium dioxide in an organic liquid (US 5968673 A, published 1999) comprising the steps of:
■ producing the organogel consisting of 0.2-0.4 µm yttrium-doped zirconium dioxide powder (4 wt. parts) and an organic liquid (100 wt. parts) consisting of ethyl alcohol, a dispersant (alkylpolyoxyethylene phosphorus ether), a binder (ethylcellulose), an antifoaming agent (sorbitanoleate) and a volatile solvent;
■ depositing the organogel onto the electrode surface;
■ drying at 100°C for 1 h;
■ annealing at 1500°C for 5 h.

In fact, the formation of the electrolyte layer on the electrode occurs in this case due to electrolyte material powder sintering. Therefore the main disadvantages of said method are the high power consumption of the technological process and the poor electrochemical properties of the electrolyte and the electrode-electrolyte pair.

Known is an organogel consisting of 0.2-0.4 µm yttrium-doped zirconium dioxide powder (4 wt. parts) and an organic liquid (100 wt. parts) consisting of ethyl alcohol, a dispersant (alkylpolyoxyethylene phosphorus ether), a binder (ethylcellulose), an antifoaming agent (aorbitanoleate) and a volatile solvent (US 5968673 A, published 1999).

Disadvantages of said organogel are that it does not contribute to the formation of the dense structure in the electrolyte, does not favor temperature reduction, does not provide any applicable choice of electrode materials based on zirconium dioxide and does not provide for a technologically suitable method of electrolyte production on electrodes having different properties and parameters.

### Disclosure of the Invention.

The technical objective of the invention is the production of a low-cost electrode-electrolyte pair having an elevated electrochemical efficiency as the most important structural part of a highly efficient, economically advantageous and durable fuel cell.

Each of the inventions included into the group is aimed at achieving a separate additional objective.

More particularly, the electrode-electrolyte pair embodiment shown as the first and the fourth objectives of the invention in the suggested group of inventions achieve additional technical objectives comprising:
■ reduction of the working temperature of the electrochemical device comprising the electrode-electrolyte pair;
■ increasing the operation efficiency and reliability of the electrode-electrolyte pair;
■ reduction of the dimensions and weight per unit power generated by the fuel cell comprising the electrode-electrolyte pair;
■ adaptability of the design, materials and dimensions of the electrode;
■ higher adaptability of the electrode-electrolyte pair and lower thickness of the electrolyte layer.

Furthermore, the electrode-electrolyte pair fabrication methods shown as the second and fifth objectives of the invention in the suggested group of inventions achieve additional technical objectives comprising increasing the technological suitability of the method for commercial fabrication of the electrode-electrolyte pair, increasing the fabrication efficiency and reduction of the cost of the electrode-electrolyte pair and the entire electrochemical device, reduction of power consumption and increasing the adaptability of the method.

Furthermore, the organogel comprised in the components used for the fabrication of the first embodiment of the electrode-electrolyte pair and shown as the third objective of the invention in the suggested group of inventions achieves additional technical objectives comprising reducing the cost of the organogel, increasing its adaptability, increasing its adhesion to the electrode material and avoiding electrolyte contamination with detrimental impurities.

Below, embodiments of the electrode-electrolyte pair design, electrode-electrolyte pair fabrication methods and materials used are disclosed in accordance with the invention claimed herein that achieve said technical objective.

The first embodiment of the electrode-electrolyte pair comprises a microporous electrode to the surface of which is deposited a multilayered solid electrolyte based on zirconium dioxide with stabilizing additions. The solid electrolyte consists of the inner nanoporous three-dimensional solid electrolyte layer. The grain size of this electrolyte layer is within 1000 nm. The inner layer fills, at least partially, the surface pores of the microporous electrode to a depth of 5 - 50 µm. On the surface of the inner layer there is a dense outer electrode layer. The grain size of this electrolyte layer is also within 1000 nm.

The inner and outer electrolyte layers may have similar or different compositions.

The inner electrolyte layer has a combined amorphous and nanocrystalline structure.

The outer electrolyte layer has an amorphous structure.

As the stabilizing additions, the first electrolyte contains magnesium and/or calcium and/or yttrium and/or scandium and/or aluminum and/or rare earth metals and/or titanium.

The electrode is in a microporous ceramic or metallic or metalloceramic material with pore sizes of above 1 µm.

The electrode of the pair is anode or cathode with a flat or pipe-like shape.

The anode is in a porous metallic material consisting of nickel and/or cobalt and/or their alloys.

The anode is made of a volume mesh or a foam material.

The electrolytic efficiency of the electrode-electrolyte pair and the entire electrochemical device is increased due to the following advantages:
■ increasing the lateral conductivity of the electrolyte due to the optimization of the outer and inner zirconium dioxide layers by doping;
■ increasing the electric contact area of the electrolyte with the electrode material due to the use of the inner surface of electrode pores;
■ reduction of the electrical resistivity at the electrode-electrolyte boundary due to the low electrode deposition temperatures;
■ increasing the electrochemical contact area of the gaseous phase, the electrode and the electrolyte due to the nanoporous inner electrolyte layer and the surface conductivity.

Reduction of the working temperature of the electrochemical device consisting of the electrode-electrolyte pair is achieved due to the above advantages and the possibility of producing a dense electrolyte layer having a minimum thickness.

Increasing the operation efficiency and reliability of the electrode-electrolyte pair is achieved due to the high strength of the amorphous and nanocrystalline structure of zirconium dioxide; elimination of the surface stress concentrators in the electrode due to the nanoporous inner electrode layer; the high damping capacity of the inner nanoporous and the three-dimensional electrolyte layers that avoid cracking in the electrolyte.

As is well known, the cost, dimensions and weight of an electrochemical generator consisting of fuel cells are determined as per unit generated power. Therefore any increase in the electrochemical efficiency of the electrode-electrolyte pair reduces the cost, dimensions and weight. For example, in the generation of 1 kW of electric power, an increase in the unit power from 0.25 W/cm² to 1 W/cm² results in a 4-fold cost reduction, decrease in the dimensions, i.e. fuel cell area, from 0.4 m² to 0.1 m² and a 4-fold weight reduction.

The increase in the adaptability of the device technology is achieved due to the possibility of using electrodes having a porosity of above 1 µm made from ceramic, metalloceramic and metallic materials, in the form of a cathode or anode having a flat or pipe shape.

The electrode-electrolyte pair fabrication method based on zirconium dioxide following the first embodiment of the invention comprises the formation, on the microporous electrode surface, of a partially electrode-penetrating multilayered solid electrolyte based on zirconium dioxide with stabilizing additions. During the formation, the microporous electrode surface is initially impregnated with organogel consisting of particles of zirconium dioxide with stabilizing additions and an organic solution containing organic salts of zirconium and the stabilizing metals. The next step is destruction of the organogel organic part that leads to the chemical deposition of the inner nanoporous three-dimensional solid electrolyte layer on the electrode surface. Then, the inner organogel layer is deposited onto the surface, said layer consisting of nanosized particles of zirconium dioxide with stabilizing additions and an organic solution containing organic salts of zirconium and the stabilizing metals. The next step is destruction of the organogel organic part that leads to the chemical deposition of the dense outer layer of the multilayered electrolyte onto the inner layer surface.

The organogel used for the formation of the inner and outer solid electrolyte layers can be of similar or different compositions.

The stabilizing additions for the solid electrolyte according to this method can be magnesium and/or calcium and/or yttrium and/or scandium and/or aluminum and/or rare earth metals and/or titanium.

The microporous electrode surface is impregnated with organogel in vacuum or by mechanical pressing the organogel into the microporous surface of the electrode.

Destruction is performed by high-energy impact that causes the descomposition of the organic part of the organogel, e.g. thermal, induction or infrared heating, or electron or laser beam impact or plasmachemical impact.

Organogel destruction is performed with high-rate pyrolysis at temperatures within 800°C in an oxidizing, inert or weakly reducing gas atmosphere.

Organogel organic part destruction is performed simultaneously or in sequence, by organogel impregnation or deposition to the inner layer surface.

During organogel impregnation of the electrode or organogel deposition to the inner layer surface with simultaneous destruction, the organogel is deposited to the surface to be coated by spraying or printing.

During organogel impregnation of the electrode or organogel deposition to the inner layer surface with subsequent destruction, the organogel is deposited to the cold surface of the electrode or the inner layer with subsequent high-rate heating of the electrode.

Organogel impregnation of the electrode or organogel deposition to the inner layer surface and organogel destruction are performed in one or multiple steps.

Said technical result is achieved due to the high rate of material deposition and electrolyte formation on the electrode surface; possibility of using simple and cheap equipment, use of low temperatures, possibility of setting up the technological process in a completely automatic conveyor embodiment; method adaptability with respect to electrolyte composition choice; method adaptability with respect to electrode-electrolyte pair design choice; possibility of taking the properties and parameters of the electrode materials into account.

The organogel used for the fabrication of the electrode-electrolyte pair contains nanosized particles of zirconium dioxide with stabilizing additions and an organic solution containing organic salts of zirconium and the stabilizing metals, a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250.

The stabilizing metals used for the organogel are magnesium and/or calcium and/or yttrium and/or scandium and/or aluminum and/or rare earth metals and/or titanium.

As the organic solvent, the organogel contains carbonic acid and/or any organic solvent of carbonic acid metal salts.

The organogel contains nanosized particles from 3 to 100 nm.

The concentration of stabilizing additions in zirconium and metal salts in the organogel is selected at 0.05 to 1 mole/l in a ratio corresponding to the electrolyte stoichiometric composition.

The volume ratio of the nanosized particles in the organogel is within 85%.

The second embodiment of the electrode-electrolyte pair comprises a nanoporous electrode to the surface of which is deposited a layer or dense three-dimensioned electrolyte based on zirconium dioxide with stabilizing additions the grain size of which is within 1000 nm. The electrolyte fills the surface pores of the nanoporous electrode to a depth of 1 - 5 µm.

The electrolyte has an amorphous structure.

As the stabilizing additions, the electrode-electrolyte pair contains magnesium and/or calcium and/or yttrium and/or scandium and/or aluminum and/or rare earth metals and/or titanium.

The electrode is in a microporous ceramic or metallic or metalloceramic material with pore sizes, at least near the surface, of within 1 µm. In this embodiment of the electrode-electrolyte pair, the electrode may have a functional or technological sublayer on the surface. This sublayer can be in a nanoporous cathodic or anodic material, another electrolyte material or a fine-grained mixture of the electrode and the electrolyte materials.

The electrode of the pair is anode or cathode with a flat or pipe shape.

The anode is in a porous metallic material consisting of nickel and/or cobalt and/or their alloys.

The electrode-electrolyte pair fabrication method based on zirconium dioxide following the second embodiment of the invention comprises the formation, on the microporous electrode surface, of a dense three-dimensional solid electrolyte layer based on zirconium dioxide with stabilizing additions. During the formation, the nanoporous electrode surface is initially impregnated with an organic solution containing organic salts of zirconium and the stabilizing metals, a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The next step is destruction of the solution organic part that leads to the chemical deposition of the solid electrolyte on the electrode surface.

As the stabilizing additions, the electrode-electrolyte pair contains magnesium and/or calcium and/or yttrium and/or scandium and/or aluminum and/or rare earth metals and/or titanium.

As the organic solvent, the solution contains carbonic acid or toluene or octanol or any organic solvent of carbonic acid metal salts.

Destruction is performed by high-energy impact that causes the decomposition of the organic part of the solution, e.g. thermal, induction or infrared heating, or electron or laser beam impact or plasmachemical impact.

Solution destruction is performed with high-rate pyrolysis at temperatures within 800°C in an oxidizing, inert or weakly reducing gas atmosphere.

Solution organic part destruction is performed simultaneously or in sequence with the impregnation.

During electrode impregnation with simultaneous destruction, the solution is deposited to the surface to be coated by spraying or printing.

During electrode impregnation with subsequent destruction, the solution is deposited to the cold surface of the electrode with subsequent high-rate heating of the electrode.

The concentration of stabilizing additions in zirconium and metal salts in the solution is selected at 0.05 to 1 mole/l in a ratio corresponding to the electrolyte stoichiometric composition.

Solution deposition onto the electrode or destruction are performed in one or multiple steps.

### Brief description of the drawings

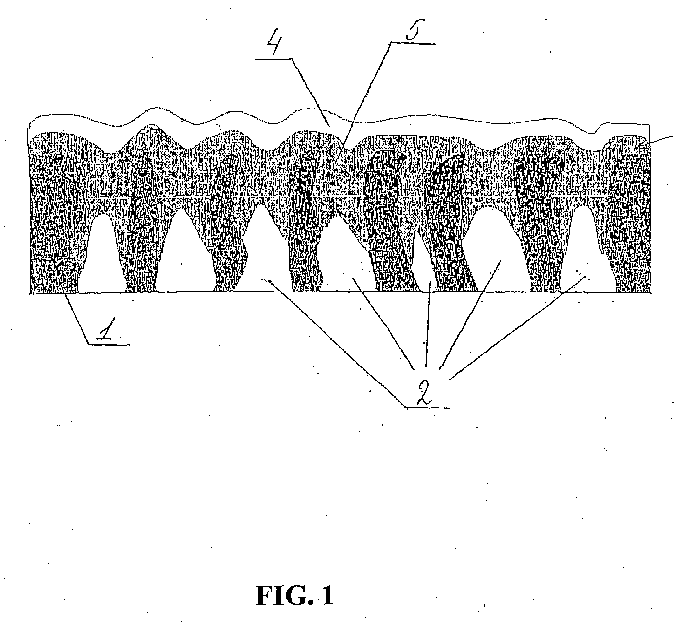

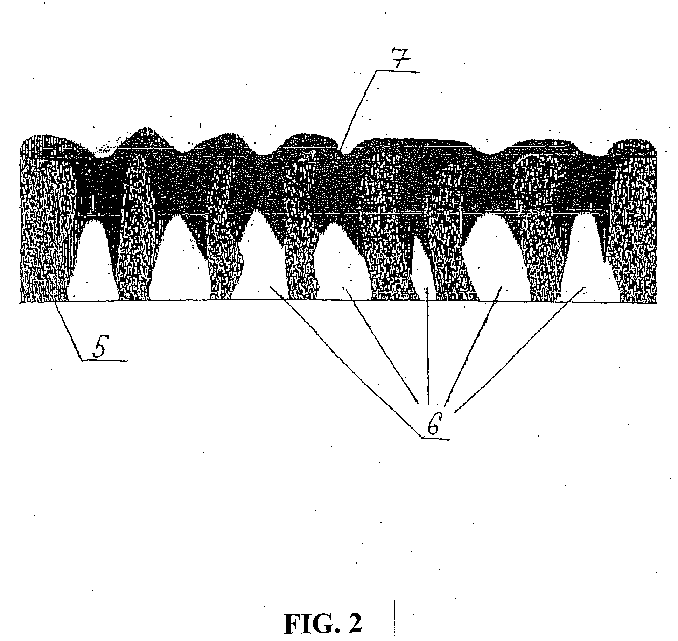

Figure 1 shows schematic of one embodiment of the electrode-electrolyte pair according to the invention. Figure 2 shows schematic of another embodiment of the electrode-electrolyte pair.

### Embodiments of the invention

The electrode-electrolyte pair (Fig. 1) comprises a microporous electrode 1 with pores 2, an inner nanoporous three-dimensional solid electrolyte layer 3 and a dense outer solid electrolyte layer 4. Figure 2 shows a nanoporous electrode 2 with pores 6 and a dense three-dimensional solid electrolyte layer 7.

The efficiency of a fuel cell (electrical power generated per unit surface) is determined by the following factors:
■ ionic conductivity of the electrolyte based on zirconium dioxide (the higher the conductivity, the greater the power available);
■ electrolyte layer thickness (the greater the thickness, the greater the power);
■ electrical resistivity at the electrode-electrolyte boundary (the lower the resistivity, the greater the power);
■ contact area between the electrode and the electrolyte (the greater the area, the greater the power);
■ electrochemical contact area of the gaseous phase, the electrode and the electrolyte (the greater the electrochemical contact area, the greater the power).

Thus, the efficiency of a fuel cell, i.e. that of an electrode-electrolyte pair, is determined by the composition of zirconium dioxide and the electrode-electrolyte pair design.

The operation efficiency of the electrode-electrolyte pair is mainly determined by the density of the zirconium dioxide electrolyte layer (absence of through pores and macrocracks) and its ability to resist thermal stresses both during the fabrication and during the operation of the fuel cell. The latter quality of the electrolyte layer material depends on the strength of the material, electrolyte adhesion to the electrode material and the ability of the electrode-electrolyte pair to relieve mechanical stresses without forming cracks, taking into account the role of the surface stress concentrators on the electrode-electrolyte boundary.

Thus, the efficiency of the electrode-electrolyte pair, is determined by the composition of metal-doped zirconium dioxide, its mechanical properties under the condition of their maximum matching with the mechanical properties of the electrode and the design of the zirconium dioxide layer on the porous electrode surface.

The possibility of achieving the optimum properties and parameters of an electrode-electrolyte pair is determined by its fabrication method.

As the electrolyte material for fuel cells, metal-doped zirconium dioxide is used. As the doping metals, alkaline and rare-earth metals, yttrium, scandium, aluminum and titanium are used. Doping allows producing partially stabilized zirconium dioxide (tetragonal structure) or completely stabilized zirconium dioxide (cubic fluorite structure). Tetragonal zirconium dioxide has a higher strength as compared with the cubic one but lower oxygen ion conductivity. Moreover, doping allows producing zirconium dioxide of combined conductivity that can be used as a sublayer on the cathode or anode for reducing the electrical resistivity at the electrode-electrolyte boundary.

According to this embodiment of the invention (Fig. 1) electrode 1 can have a flat or pipe shape, act as a cathode or an anode and be made from a ceramic, metallic or metalloceramic material with a pore size of above 1 µm. For example, anode can be made from metals, such as nickel, cobalt or their alloys; metalloceramics, such as NiO(Ni)-stabilized zirconium dioxide, NiO(Ni)-stabilized cerium dioxide, CoO(Co)-stabilized zirconium dioxide or CoO(Co)-stabilized cerium dioxide. A metallic anode can be made from foam metal or a volume mesh. Ceramic cathode can be made from perovskite family ceramics, such as LaMnO₃, LaCoO₃, LaNiO₃, lanthanum gallates and other metal oxides having a good electronic conductivity and catalytic activity to ionize air oxygen. Cathode can be made from metal with a protective oxide coating. Electrode porosity is typically 20 to 80%.

The inner nanoporous three-dimensional layer 3 consisting of stabilized zirconium dioxide penetrates into the porous electrode 1 to a depth of 5 - 50 µm. The stabilizing metals can be calcium, magnesium, yttrium, scandium, aluminum, rare-earth and transition metals and titanium. The penetration depth (H) depends on electrode pore diameter (D), typically as H = (2-3) D.

The key problem of thin electrolyte layer efficiency and reliability, however produced, is its defectiveness, i.e. the presence of pores and microcracks, as well as poor adhesion. The main origin of this problem are the high thermal and internal stresses both in the electrolyte itself and on the phase boundary. During electrode deposition onto the porous surface of electrode 1, the surface microroughnesses act as stress concentrators thus leading to crack initiation even at relatively low thermal and internal stresses.

In the invention disclosed herein, of extreme importance is the inner nanoporous three-dimensional electrolyte layer 3 made from stabilized zirconium dioxide. For example, due to the penetration of the layer 3 into the electrode 1, its nanoporousity and the good adhesion to the materials of the electrode 1, the surface stress concentrators are eliminated, the electrode and electrolyte thermal expansion coefficients are matched and the mechanical stresses are relieved. The above effects become even stronger if the inner layer 3 has a porosity gradient, i.e. an increase in porosity from the electrode surface downwards. These factors tangibly increase the reliability and operation efficiency of the electrode-electrolyte pair, primarily expressed in the prevention of cracking and defect formation in the dense layer 4. Moreover, this advantage provides for the minimization of the thickness of the dense layer 4, thus reducing the working temperature of the electrochemical device and an increase in its electrochemical efficiency.

For example, the suggested inner layer 3 consisting of tetragonal zirconium dioxide can relieve stresses of up to 1000 MPa when in combination with a ceramic electrode and up to 2000 MPa when in combination with a metallic electrode. By way of comparison, the critical stress for a dense two-dimensional layer 4 of tetragonal zirconium dioxide is 400-450 MPa.

The suggested inner layer 3 consisting of cubic fluorite zirconium dioxide can relieve stresses of 30-40% lower than tetragonal zirconium dioxide can. By way of comparison, the critical stress for a dense two-dimensional layer 4 of cubic zirconium dioxide is 180-250 MPa.

The high strength and cracking resistance of the inner layer 3 that are of primary importance for the fabrication of the electrode-electrolyte pair are achieved due to the three dimensions and the specific combined structure consisting of 3 - 1000 nm grains and an amorphous phase.

In the invention disclosed herein, the role of the inner nanoporous three-dimensional layer 3 consisting of stabilized zirconium dioxide is important also from the viewpoint of increasing the electrochemical efficiency of the electrode-electrolyte pair. First, this is due to the multiple increase in the area of the electrical contact between the material of layer 3 and the material of electrode 1. Second, the nanocrystalline layer 3 has a higher conductivity of oxygen ions. For example, the oxygen ion conductivity of a nanocrystalline layer (grain size 4 - 50 nm) of ZrO₂ - 8%Y₂O₃ electrolyte at 900 °C is 0.05 - 0.07 Sm/cm, whereas the conductivity of the same electrolyte with a microcrystalline structure is 0.02 - 0.03 Sm/cm. Third, the nanoporous layer 3 has a high surface ionic and electronic conductivity, especially in a wet gaseous atmosphere at the side of the electrode 1. Fourth, doping of stabilized zirconium dioxide that composes the inner layer 3, e.g. with rare-earth metals, titanium and transition metals produces a combined type of conductivity in the layer 3 thereby multiply increasing the area of the electrochemical contact between the ionic conductor, the electronic conductor and air oxygen (for cathodic electrode) or the fuel (for anodic electrode).

Thus, the inner layer 3 provides for a high current density, a low level of electrode overstressing and a high specific power of the fuel cell as a whole.

The dense layer 4 of solid electrolyte is a thin two-dimensional layer consisting of tetragonal or cubic zirconium dioxide that has a 100% ionic type of conductivity. Stabilizing metals can be calcium, magnesium, yttrium, scandium and aluminum. Due to the layer 4 localization on the surface of the inner nanoporous layer 3 that eliminates the surface stress concentrators and relieves all the technological and thermal stresses, it may be up to 0.5 - 5 µm in thickness. Due to this fact, the ohmic stresses in the electrolyte are minor, providing for a high electrochemical efficiency of the electrolyte as is. The amorphous structure of the layer 4 provides for its strength and elasticity that are important at the electrode-electrolyte pair fabrication stage where the reject percentage is known to be the highest. This advantage indirectly reduces the cost of the electrode-electrolyte pair and the electrochemical device as a whole. After the deposition of the electrolyte layer 4 the amorphous structure of zirconium dioxide can be crystallized without the risk of cracking in the layer.

The compositions of the layers 3 and 4 can be similar or different. The composition and properties may exhibit a gradient behavior across the layers 3 and 4. This can be achieved by sequential deposition of the layers 3 and 4 with an appropriate change in the technological conditions and the materials used. This feature broadens the potential capabilities of the pair and its technology. Moreover, where one of the electrolyte layers should have special properties, zirconium dioxide can be doped with multiple different metals. For example, stabilization of tetragonal zirconium dioxide by scandium and aluminum doping increases the strength of the electrolyte as compared with the ZrO₂ - 3 mole % Y₂O₃ composition. Stabilization of tetragonal zirconium dioxide by scandium and bismuth doping increases the density and ionic conductivity of the electrolyte as compared with the bismuth free composition.

In the electrode-electrolyte pair embodiment (Fig. 2), the electrode 5 can have flat or pipe shape, act as a cathode or an anode and be in ceramic, metallic or metalloceramic materials. A currently generally used embodiment of the electrode 5 is a cathode with a cathodic or electrolyte sublayer or an anode with an anodic or electrolyte sublayer.

The pores 6 of the electrode or the sublayer are less than 1 µm in size.

The dense three-dimensional dense electrolyte layer 7 consisting of stabilized zirconium dioxide is located on the electrode surface and partially penetrates into the pores 6 to a depth of 1 - 5 µm. The dense electrolyte layer 7 is tetragonal or cubic zirconium dioxide stabilized with metals of the following group: calcium, magnesium, yttrium, aluminum, scandium etc.. The layer 7 has an amorphous structure, at least at the deposition stage. This layer has the same functions and the same advantages as the double layer according to the first embodiment of the electrode-electrolyte pair, the only difference being in that for an electrode pore size of less than 1 µm there is no need to deposit a nanoporous inner electrolyte layer.

The first embodiment of the electrode-electrolyte pair suggested and disclosed herein (Fig. 1) is fabricated using the first suggested fabrication method and the suggested organogel.

The organogel is a metalorganic liquid consisting of an organic solution of zirconium and alloying metal organic salts with an addition of nanosize particles of stabilized zirconium dioxide. The organic basis of the metal salts is a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The organic salt solvent is carbonic acid and/or any other organic solvent of carbonic acids, e.g. toluene, octanol etc. The main function of the solvent is to adjust the viscosity of the organogel.

The salts of zirconium and alloying metals, such as calcium, magnesium, yttrium, scandium, aluminum, titanium, bismuth, rare-earth metals, e.g. terbium or cerium, and iron group metals, are obtained by extraction from water solutions of appropriate metal salts to a mixture of carbonic acids, following which the metal carboxylates are mixed in the proportion as is required for the production of the final electrolyte stoichiometric composition. The concentration of each metallic element in the carboxylates may vary from 0.05 to 1.0 mole/I.

The material of the nanosized particles is stabilized and/or doped zirconium dioxide. The size of the nanoparticles corresponding to the electrolyte composition or part of the electrolyte composition is 3 to 100 nm. The volume ratio of the particles in the organogel may reach 85% of the total organic liquid volume. The volume ratio of the particles in the organogel controls the organogel viscosity and the density of the electrolyte layer deposited. The higher the particles content, the higher the organogel viscosity and the nanoporosity of the electrolyte layer deposited. The rule for determining the optimum volume ratio of the particles in the organogel is as follows: the greater the electrode pore size, the greater the volume ratio of the particles. Organogel is produced by mechanically mixing the particles and the organic liquid.

The electrolyte layer production method is based on destruction (decomposition) of the organogel organic component deposited on the electrode surface. An oxide layer forms on the surface, composed of the particles and oxides of the metals chemically deposited from appropriate metal carboxylates in the organogel composition. Oxides of metals deposited from carboxylates cement the particles between themselves to form a monolithic structure. Unlike other solution deposition methods that produce metal oxide powders on the surface that need high-temperature sintering, the method disclosed herein allows direct production of a compact electrolyte layer at low temperatures, this being a fundamental distinctive feature of the method.

The difference is attributed to the property of metal oxides deposited from carboxylates to have an amorphous structure during destruction. An amorphous structure is a solid counterpart of liquids, and, by analogy with liquid electrolytes, it has the following advantages:
■ it provides for the greatest possible area of electrochemical contact between the zirconium dioxide deposited electrolyte and the electrode materials;
■ it inherits the microroughnesses of the electrode surfaces, including the surface of their open pores;
■ it covers the open pores and microcracks on the surface of electrodes.

Moreover, sequential transition from the liquid state of the organogel to a crystalline zirconium oxide structure through an intermediate amorphous state allows optimizing some useful properties of the electrolyte, such as adhesion, internal stresses and diffusion interaction at phase boundaries.

Stages of electrolyte formation on a microporous surface are as follows.

The first stage is deposition of the organogel onto the surface of the porous electrode 1 using any known method. During the synthesis of the inner nanoporous three-dimensional electrolyte layer 3, the deposition includes impregnation of the surface pores 2 of the electrodes with the organogel. The impregnation is performed by mechanical pressing of the organogel into the porous surface of the electrode, e.g. with a paint roller, or by vacuum impregnation. Vacuum impregnation is preferably used for small pore electrodes. For the production of the dense outer electrolyte layer 4, the organogel is deposited by spraying or printing.

The second stage is destruction (decomposition) to produce an electrolyte layer on the surface and remove the organic components in a gaseous state.

The two above process stages can be unified by depositing the organogel onto the heated electrode surface by spraying or printing, provided the surface temperature is sufficient for destruction.

The electrolyte layer can be synthesized using any process that causes destruction of the organic part of the organogel, e.g. thermal, induction or infrared heating, or electron or laser beam impact or plasmachemical impact.

The simplest and cheapest method from the technological and economical viewpoints is thermal destruction (pyrolysis). The destruction onset temperature for the organogel is about 200 °C. The process can be conducted under atmospheric pressure in air or in an inert or weakly reducing gas atmosphere. The temperature and the gas atmosphere determine the destruction rate and hence electrolyte properties. Stabilization of the intermediate amorphous state is preferably performed in an inert or weakly reducing gas atmosphere or using high-rate destruction methods. The minimum electrolyte layer formation time is 30 seconds.

For example, an electrolyte layer can be synthesized by heating the electrode in an inert or weakly reducing gas atmosphere to within 800 °C and depositing the organogel onto the surface by spraying. High-temperature impregnation of the electrode surface pores occurs immediately upon the incidence of the organogel onto the surface. During destruction, the organic part of the organogel decomposes to volatile components, whereas the surface, including the surface pores, becomes covered with oxides that form the electrolyte layer. During the second deposition of the organogel the electrolyte layer forms on the surface of the first deposited layer. The density and properties of the outer electrolyte layer are determined by the organogel composition and properties.

Organogel can be deposited onto the cold electrode surface for further destruction. For thermal destruction, the temperature should also be within 800 °C.

The final synthesis of crystalline electrolyte from the already formed amorphous material layer implies final air heat treatment. Preferably, the heat treatment temperature should not exceed the working temperature of the electrochemical device by more than 10 - 15%.

Organogel properties, such as particle composition, metal composition and concentrations in the organic salt mixture, and the volume ratios of the particles and the carboxylate solution are chosen depending on the final electrolyte composition, thickness, substrate surface properties etc.. These organogel properties allow controlling all the electrolyte parameters with due regard to the substrate surface properties.

The method allows producing electrolyte films on substrates of any materials, shapes and sizes.

The method is very efficient and cost-effective.

The method is easily adaptable to complete automation and conveyor fabrication setup.

The low electrolyte layer synthesis temperatures provide for yet another fundamental advantage in comparison with the other known methods. This advantage is the absence of chemical interaction between the electrolyte and the electrode materials. This results in the absence of highly electrically resistant oxides on the phase boundary and hence provides for a significant increase in current density and specific power of the fuel cell.

Below, the possibilities of the first electrode-electrolyte pair embodiment fabrication method and the organogel for this method will be illustrated with specific examples that do not limit the scope of this invention.

### Example 1.

Organogel for the production of electrolyte of the ZrO₂ - Y₂O₃ system, e.g., ZrO₂ - 3 mole% Y₂O₃ (3YZS being tetragonal partially stabilized zirconium dioxide) and ZrO₂ - 8 mole% Y₂O₃ (8YSZ being cubic stabilized zirconium dioxide).

Example 1.1. Zr and Y carboxylates with concentrations of 1.0 mole/l are produced by extraction of water salts of zirconium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Zr and Y carboxylates are mixed in proportions corresponding to the stoichiometric composition ZrO₂ - 3 mole% Y₂O₃ or ZrO₂ - 8 mole% Y₂O₃.

The solutions of each carboxylate corresponding to the 3YSZ and 8YSZ compositions are mixed with 3-100 nm sized nanometric particles with the 3YSZ and 8YSZ compositions, respectively. The volume ratio of the nanometric particles is 85% of the organic liquid volume.

Organogel according to Example 1.1 is used for the production of the inner nanoporous three-dimensional 3YSZ or 8YSZ composition electrolyte layer on metallic, metalloceramic or ceramic electrodes with pore sizes from 5 to 30 µm and penetration depth into the electrode of 10 to 60 µm, respectively.

Example 1.2. Solution of Zr and Y carboxylates with concentrations of 1.0 mole/l as in Example 1.1 corresponding to the 3YSZ and 8YSZ compositions is produced.

The solutions of each carboxylate corresponding to the 3YSZ and 8YSZ compositions are mixed with 3 - 100 nm sized nanometric particles with the 3YSZ and 8YSZ compositions, respectively. The volume ratio of the nanometric particles is 5 to 20% of the organic liquid volume.

Organogel according to Example 1.2 is used for the production of the dense outer 3YSZ or 8YSZ composition electrolyte layer on the surface of the inner nanoporous three-dimensional electrolyte layer based on doped zirconium dioxide or on the surface of any other sublayer.

Example 1.3. Solution of Zr and Y carboxylates with concentrations of 0.05 mole/l as in Example 1.1 corresponding to the 3YSZ and 8YSZ compositions is produced.

The solutions of each carboxylate corresponding to the 3YSZ and 8YSZ compositions are mixed with 3 - 100 nm sized nanometric particles with the 3YSZ and 8YSZ compositions, respectively. The volume ratio of the nanometric particles is 20 to 50% of the organic liquid volume.

Organogel according to Example 1.3 is used for the production of the inner nanoporous three-dimensional 3YSZ or 8YSZ composition electrolyte layer on metallic, metalloceramic or ceramic electrodes with pore sizes from 1 to 5 µm and penetration depth into the electrode of 3 to 15 µm, respectively.

Example 1.4. Solution of Zr and Y carboxylates with concentrations of 0.05 mole/l as in Example 1.1 corresponding to the 3YSZ and 8YSZ compositions is produced.

The solutions of each carboxylate corresponding to the 3YSZ and 8YSZ compositions are mixed with 3 - 100 nm sized nanometric particles with the 3YSZ and 8YSZ compositions, respectively. The volume ratio of the nanometric particles is 1 to 10% of the organic liquid volume.

Organogel according to Example 1.4 is used for the production of the dense outer 3YSZ or 8YSZ composition electrolyte layer on the surface of the inner nanoporous three-dimensional electrolyte layer based on doped zirconium dioxide or on the surface of any other sublayer.

### Example 2. Organogel for the production of electrolyte of the ZrO₂ - Sc₂O₃ and ZrO₂ - Sc₂O₃ - Al₂O₃ systems.

Example 2.1. Zr, Sc and Al carboxylates with concentrations of 0.05 to 1.0 mole/l are produced by extraction of water salts of zirconium, scandium and aluminum to a mixture of carbonic acids with the general formula H(CH₂-CH₂)ₙCR'R"-COOH, where R' is CH₃, R" is CₘH(m+1) and m is from 2 to 6, with an average molecular weight of 140-250. The excess quantity of carbonic acids act as solvent. Zr, Sc and Al carboxylates are mixed in proportions corresponding to the stoichiometric composition **ZrO**_{**2**} **- Sc**_{**2**}**O**_{**3**} or **ZrO**_{**2**} **- SC**_{**2**}**O**_{**3**}**- Al**_{**2**}**O**_{**3**}**.**

The solutions of each carboxylate corresponding to the **ZrO**_{**2**} **- Sc**_{**2**}**O**_{**3**} **or ZrO**_{**2**} **- Sc**_{**2**}**O**_{**3**}**- Al2O3** system compositions are mixed with 3 - 100 nm sized nanometric particles with the **ZrO**_{**2**} **- Sc**_{**2**}**O**_{**3**} or **ZrO**_{**2**} **- Sc**_{**2**}**O**_{**3**}**-** A1203 system compositions, respectively.

The volume ratio of the nanometric particles is 40 to 60% of the organic liquid volume.

Organogel according to Example 2.1 is used for the production of the inner nanoporous three-dimensional **ZrO**_{**2**} **- Sc**_{**2**}**O**_{**3**} **or ZrO**_{**2**} **- Sc**_{**2**}**O**_{**3**} **- Al2O3** system composition electrolyte layer on metallic, metalloceramic or ceramic electrodes with pore sizes from 3 to 10 µm and penetration depth into the electrode of 6 to 20 µm, respectively.

Example 2.2. Zr, Sc and A1 carboxylate solutions with concentrations of 0.05 to 1.0 mole/l as in Example 2.1. corresponding to the stoichiometric composition of the **ZrO**_{**2**} **- Sc**_{**2**}**O**_{**3**} **or ZrO**_{**2**} **- Sc**_{**2**}**O**_{**3**} **-** Al2O3 system are produced.

The solutions of each carboxylate corresponding to the **ZrO**_{**2**} **- Sc**_{**2**}**O**_{**3**} **or ZrO**_{**2**} **- Sc**_{**2**}**O**_{**3**} **- Al2O3** system compositions are mixed with 3 - 100 nm sized nanometric particles with the **ZrO**_{**2**} **- Sc**_{**2**}**O**_{**3**} or **ZrO**_{**2**} **- Sc**_{**2**}**O**_{**3**} **- Al2O3** system compositions, respectively.

The volume ratio of the nanometric particles is 1 to 20% of the organic liquid volume.

Organogel according to Example 2.2 is used for the production of the dense outer electrolyte layer with the **ZrO**_{**2**} - **Sc**_{**2**}**O**_{**3**} or **ZrO**_{**2**} - **Sc**_{**2**}**O**_{**3**} - **Al2O3** system composition.

### Example 3.

Organogel for the production of electrolyte of the (Zr,Y,Tb)O₂ system having a combined type of conductivity, e.g. Zr_{1-x-y} YₓTb_{y}O_{2-z}, where x = 0.12 - 0.2 and y = 0.15 - 0.2.

Example 3.1. Zr, Tb and Y carboxylates with concentrations of 1.0 mole/l are produced by extraction of water salts of zirconium, terbium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Zr, Tb and Y carboxylates are mixed in proportions corresponding to the stoichiometric composition Zr_{1-x-y} YₓTb_{y}O_{2-z}, where x = 0.12 - 0.2 and y = 0.15 - 0.2.

The solution is mixed with 3 - 100 nm sized nanometric particles with the Zr_{1-x-y} YₓTb_{y}O_{2-z} composition. The volume ratio of the nanometric particles is 50 to 85% of the organic liquid volume.

Organogel according to Example 3.1 is preferably used for the production of the inner nanoporous three-dimensional Zr_{1-x-y} YₓTb_{y}O_{2-z} electrolyte layer on metallic or ceramic electrodes with pore sizes from 5 to 30 µm and penetration depth into the electrode of 10 to 60 µm, respectively.

Example 3.2. Zr, Tb and Y carboxylates with concentrations of 0.05 to 0.5 mole/l are produced as in Example 3.1. Zr, Tb and Y carboxylates are mixed in proportions corresponding to the stoichiometric composition Zr_{1-x-y} YₓTb_{y}O_{2-z}, where x = 0.12 - 0.2 and y = 0.15 - 0.2.

The solution is mixed with 3 - 100 nm sized nanometric particles with the Zr_{1-x-y} YₓTb_{y}O_{2-z} composition. The volume ratio of the nanometric particles is 20 to 50% of the organic liquid volume.

Organogel according to Example 3.2 is preferably used for the production of the inner nanoporous three-dimensional Zr_{1-x-y} YₓTb_{y}O_{2-z} electrolyte layer on metallic or ceramic electrodes with pore sizes from 1 to 7 µm and penetration depth into the electrode of 3 to 15 µm, respectively.

### Example 4.

Organogel for the production of electrolyte of the (Zr,Y)O₂ - TiO₂ system having a combined type of conductivity, e.g. ZrO₂ - 12 mole% Y₂O₃- 20 mole% TiO₂.

Zr, Ti and Y carboxylates with concentrations of 0.05 to 1.0 mole/l are produced by extraction of water salts of zirconium, titanium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Zr, Ti and Y carboxylates are mixed in proportions corresponding to the stoichiometric composition ZrO₂ - 12 mole% Y₂O₃ - 20 mole% TiO₂.

The solution is mixed with 3 - 100 nm sized nanometric particles with the ZrO₂ - 12 mole% Y₂O₃ - 20 mole% TiO₂ composition. The volume ratio of the nanometric particles is 20 to 85% of the organic liquid volume.

Organogel according to Example 4 is preferably used for the production of the inner nanoporous three-dimensional ZrO₂ - 12 mole% Y₂O₃ - 20 mole% Ti02 electrolyte layer with pore sizes of above 1 µm.

### Example 5.

Method of fabricating an electrode-electrolyte pair comprising a microporous electrode and a two-layered electrolyte based on zirconium dioxide.

The electrode materials for this example can be as follows:
- ceramic cathode, e.g. of the perovskites group of the manganites, cobaltites, nickelites, chromites etc. family;
- metallic cathode made from, e.g. ferritic steel with a functional cathodic sublayer;
- metalloceramic anode, e.g. of the Ni - 8YSZ, Co - 8YSZ etc. system;
- metallic anode made from foam metal or volume mesh consisting of nickel, cobalt or their alloys.

The electrode shape is flat or pipe-like. The electrode may have well-developed surface roughness, porosity of 30 to 70% and pore size of 1 to 30 µm.

Example 5.1. Method of fabricating a pair of a La _{0.8} Sr _{0.2} Mn O₃ cathode and a two-layered 8YSZ based electrolyte.

The cathode has a porosity of 30% and an average pore size of 5 µm.

The electrolyte is produced by thermal destruction. The deposition is performed in at least two stages.

At the first stage, the inner nanoporous three-dimensional 8YSZ electrolyte layer is produced, primarily in the electrode surface pores. The function of the inner 8YSZ electrolyte layer is as follows:
1. transformation of large cathode surface pores to a nanoporous material corresponding to the 8YSZ electrolyte composition;
2. relieving of the internal and thermal stresses at the phase boundary of the two contacting materials and in the electrode material layer towards the electrolyte;
3. elimination of the negative effect of surface stress concentrators in the electrode material;
4. maximizing the electrochemical contact area with the electrolyte at the electrolyte side.

The inner 8YSZ electrolyte layer is obtained using the organogel according to Examples 1.1 or 1.3.

The organogel is deposited onto the cold surface with a roller by pressing it into the electrode surface pores or by one-side vacuum impregnation of the porous electrode. Destruction is performed by heating the electrode to 500 - 800 °C in an argon atmosphere or in an argon and hydrogen mixture at reference pressure. Destruction produces, on the heated electrode surface, a partially amorphous three-dimensional layer of nanoporous 8YSZ electrolyte penetrating into the electrode pores to 10 - 15 µm. Electrolyte properties are stabilized by crystallization annealing at 800 - 1100 °C exceeding the working temperature of the electrochemical device by at least 15%, the electrolyte grain size being 30 - 1000 nm.

At the second stage, a dense two-dimensional 8YSZ electrolyte layer is produced on the surface of the preliminarily synthesized 8YSZ electrolyte sublayer.

This is performed using the organogel according to Examples 1.2 or 1.4. The organogel is deposited onto the cold functional sublayer surface with subsequent heating to 500 - 800 °C in an argon atmosphere or in an argon and hydrogen mixture or onto the sublayer surface heated to 500 - 800 °C in a similar atmosphere. The final treatment is in air at 800 - 1100 °C exceeding the working temperature of the electrochemical device by at least 15%. As a result, a dense, defect- and crack-free two-dimensional 8YSZ electrolyte layer with a grain size of 30 - 1000 nm forms on the sublayer surface. The thickness of this latter layer is 3 - 10 µm.

Organogel according to Example 1.4 can be deposited onto the sublayer surface heated to 200 - 500 °C in air or in an inert atmosphere. Destruction produces dense, defect- and crack-free two-dimensional 8YSZ electrolyte layer on the sublayer surface. The final treatment is in air at 800 - 1100 °C exceeding the working temperature of the electrochemical device by at least 15%. As a result, a dense, defect- and crack-free two-dimensional 8YSZ electrolyte layer with a grain size of 30 - 1000 nm forms on the sublayer surface. The thickness of this latter layer is 1 - 5 µm.

The electrolyte produced as above was a continuous layer part of which, i.e. the three-dimensional nanoporous electrolyte, penetrated into the porous electrode structure, and the other part, i.e. the dense two-dimensional layer was uniformly distributed over the surface and inherited its roughness pattern.

Example 5.2. Method of fabricating a pair of a La _{0.8} Sr _{0.2} Mn O₃ cathode and a two-layered electrolyte based on zirconium dioxide of different compositions.

The cathode has a porosity of 30% and an average pore size of 5 µm.

The electrolyte is produced by thermal destruction. The deposition is performed in at least two stages.

At the first stage, the inner nanoporous three-dimensional Zr_{1-x-y} YₓTb_{y}O_{2-z} electrolyte layer having a combined ionic and electronic p-type of conductivity is produced. The function of the inner Zr_{1-x-y} YₓTb_{y}O_{2-z} electrolyte layer is as follows:
1. transformation of large cathode surface pores to a nanoporous material corresponding to the Zr_{1-x-y} YₓTb_{y}O_{2-z} electrolyte composition;
2. relieving of the internal and thermal stresses at the phase boundary of the two contacting materials and in the electrode material layer towards the electrolyte;
3. elimination of the negative effect of surface stress concentrators in the electrode material;
4. maximizing the electrochemical contact area with the electrolyte at the electrode side;
5. maximizing the electrochemical contact area with the electrolyte at the electrolyte side;
6. minimization of the cathode resistance.

The inner Zr_{1-x-y} YₓTb_{y}O_{2-z} electrolyte layer is produced using the organogel according to Example 3.1.

The inner layer production method is as in Example 5.1.

At the second stage, a dense two-dimensional Zr_{1-x-y} YₓTb_{y}O_{2-z} electrolyte layer is produced on the surface of the preliminarily synthesized Zr_{1-x-y} YₓTb_{y}O_{2-z} electrolyte sublayer.

This is performed using the organogel according to Example 2.2. The dense outer layer production method is as in Example 5.1.

The electrolyte produced as above was a continuous layer part of which, i.e. the three-dimensional nanoporous electrolyte of the Zr_{1-x-y} YₓTb_{y}O_{2-z} composition, penetrated into the porous electrode structure, and the surface layer, i.e. the dense two-dimensional ZrO₂ - Sc₂ layer was uniformly distributed over the surface and inherited its roughness pattern.

Example 5.3. Method of fabricating a pair of a 50% NiO - 50% 8YSZ anode and a two-layered electrolyte based on zirconium dioxide of different compositions.

The cathode has a porosity of 30% and an average pore size of 3 µm.

The electrolyte is produced by thermal destruction. The deposition is performed in at least two stages.

At the first stage, the inner nanoporous three-dimensional ZrO₂ - 12 mole% Y₂O₃- 20 mole% TiO₂ electrolyte layer having a combined ionic and electronic p-type of conductivity is produced. The function of the inner ZrO₂ - 12 mole% Y₂O₃ - 20 mole% TiO₂ electrolyte layer is as follows:
1. transformation of large cathode surface pores to a nanoporous material corresponding to the ZrO₂ - 12 mole% Y₂O₃ - 20 mole% TiO₂ electrolyte composition;
2. relieving of the internal and thermal stresses at the phase boundary of the two contacting materials and in the anode material layer towards the electrolyte;
3. elimination of the negative effect of surface stress concentrators in the anode material;
4. maximizing the electrochemical contact area with the electrolyte at the anode side;
5. maximizing the electrochemical contact area between the gaseous fuel, the anode material and the electrolyte;
6. minimization of the anode resistance.

The inner ZrO₂ - 12 mole% Y₂O₃ - 20 mole% TiO₂ electrolyte layer is produced using the organogel according to Example 4.

The inner layer production method is as in Example 5.1.

At the second stage, a dense two-dimensional 8YSZ or ZrSc_{0.15}O₂ electrolyte layer is produced on the surface of the preliminarily synthesized ZrO₂ - 12 mole% Y₂O₃ - 20 mole% TiO₂ electrolyte sublayer.

This is performed using the organogel according to Examples 1.4 or 2.2. The dense outer layer production method is as in Example 5.1.

The electrolyte produced as above was a continuous layer part of which, i.e. the three-dimensional nanoporous electrolyte of the ZrO₂ - 12 mole% Y₂O₃ - 20 mole% TiO₂ composition with a combined type of conductivity, penetrated into the porous electrode structure to 6 - 8 µm, and the surface layer, i.e. the dense two-dimensional 8YSZ or ZrSc_{0.15}O₂ layer was uniformly distributed over the surface and inherited its roughness pattern.

Example 5.4. Method of fabricating a pair of a (nickel, cobalt or their alloy) anode and a two-layered electrolyte based on zirconium dioxide of different or similar compositions.

The metallic anode is a foam metal or a volume mesh and has a porosity of 30 -60% and an average pore size of 10 - 50 µm.

The electrolyte is produced by thermal destruction. The deposition is performed in at least two stages.

At the first stage, the inner nanoporous three-dimensional ZrO₂ - 12 mole% Y₂O₃ - 20 mole% TiO₂ electrolyte layer having a combined ionic and electronic n-type of conductivity, as in Example, 5.3, or a 8YSZ layer having an ionic type of conductivity, as in Example 5.1, is produced. The function of the inner electrolyte layer is as in Example 5.3 or Example 5.1.

The inner layer production method is as in Example 5.1 or Example 5.3.

At the second stage, a dense two-dimensional 8YSZ electrolyte layer is produced on the surface of the preliminarily synthesized sublayer.

This is performed using the organogel according to Example 1.4. The dense outer layer production method is as in Example 5.1.

The electrolyte produced as above was a continuous layer part of which, i.e. the three-dimensional nanoporous electrolyte of the ZrO₂ - 12 mole% Y₂O₃ - 20 mole% TiO₂ composition with a combined type of conductivity or 8YSZ with an ionic type of conductivity, penetrated into the porous electrode structure to 20 - 100 µm, and the surface layer, i.e. the dense two-dimensional 8YSZ layer was uniformly distributed over the surface and inherited its roughness pattern.

The second embodiment of the electrode-electrolyte pair suggested and disclosed herein (Fig. 2) is fabricated using the second suggested fabrication method.

The electrolyte production method is based on destruction (decomposition) of the organic component of the organic solution of zirconium and stabilizing metal salts deposited onto the electrode surface. The organic salts are carboxylates of zirconium, calcium, magnesium, yttrium, scandium and aluminum in a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The organic salt solvent is any carbonic acids, e.g. toluene, octanol or other organic solvent.

As a result of the destruction, an amorphous oxide layer forms on the surface, the composition of which corresponds to that of stabilized zirconium oxide. Unlike other solution deposition methods that produce metal oxide powders on the surface that need high-temperature sintering, the method disclosed herein allows direct production of a dense and defect-free electrolyte layer at low temperatures, this being a fundamental distinctive feature of the method.

The first stage is deposition of the solution onto the surface of the porous electrode 1 using any known method, preferably, spraying or printing. Due to the high liquidity and wetting capacity of the solution, impregnation of the surface pores 6 sized less than 1 µm to a depth of 1 - 5 µm occur automatically and does not requires any special methods.

The second stage is destruction (decomposition) to produce a dense electrolyte layer 7 on the surface and remove the organic components in a gaseous state.

The two above process stages can be unified by depositing the solution onto the heated electrode surface 5, provided the surface temperature is sufficient for destruction.

The electrolyte layer can be synthesized using any process that causes destruction of the organic part of the solution, e.g. thermal, induction or infrared heating, or electron or laser beam impact or plasmachemical impact.

The simplest and cheapest method from the technological and economical viewpoints is thermal destruction (pyrolysis). The destruction temperature is within 800 °C, the preferable thermal destruction temperature range being 200 - 600 °C. The process can be conducted under atmospheric pressure in air or in an inert or weakly reducing gas atmosphere. The temperature and the gas atmosphere determine the destruction rate and hence electrolyte properties. Stabilization of the intermediate amorphous state is preferably performed in an inert or weakly reducing gas atmosphere or using high-rate destruction methods. The minimum electrolyte layer formation time is 30 seconds. Destruction in air increases the oxide layer formation rate, the minimum electrolyte layer formation time in this case being 5 - 10 seconds.

The method of solution deposition onto the heated surface with simultaneous destruction is more rapid and efficient, but it leads to elevated stresses in the electrolyte layer and at the phase boundary.

The method of solution deposition onto the cold surface with subsequent destruction is less efficient, but it reduces the stress level in the layer and produces a layer that is more uniform across its thickness which is important, e.g. for the fabrication of an electrode-electrolyte pair having a high surface area. Moreover, this method is preferable for multiple electrolyte layer deposition to exclude electrolyte layer rejects as multiple layer deposition heals possible defects.

The final synthesis of crystalline electrolyte from the already formed amorphous material layer implies final air heat treatment. Preferably, the heat treatment temperature should not exceed the working temperature of the electrochemical device by more than 10-15%.

The distinctive feature of this method is the possibility of producing thin defect-free zirconium dioxide electrolyte layers composing an electrode-electrolyte layer with two-layered electrolyte, e.g. , CeO₂/ZrO₂ BiO₂/ZrO₂ or La(Sr)Ga(Mg)O₃/ ZrO₂.

The choice of the solution deposition and destruction method and gas atmosphere composition provide for the high adaptability of the method and allow producing high-quality electrode-electrolyte pairs with due regard to the properties and parameters of the composing materials.

Below, the possibilities of the second electrode-electrolyte pair fabrication method will be illustrated with specific examples that do not limit the scope of this invention (Fig. 2).

### Example 6.

Method of fabricating an electrode-electrolyte pair comprising a nanoporous electrode (sublayer) and a dense thin electrolyte based on zirconium dioxide.

The electrode or electrode sublayer materials for this example can be as follows:
- ceramic cathode, e.g. of the perovskites group of the manganites, cobaltites, nickelites, chromites etc. family;
- metallic cathode made from, e.g. ferritic steel with a functional cathodic sublayer;
- metalloceramic anode, e.g. of the Ni - 8YSZ, Co - 8YSZ etc. system;
- metallic anode made from foam metal or volume mesh consisting of nickel, cobalt or their alloys with an anode sublayer;
- electrode with other electrolyte on the surface.
   The electrode shape is flat or pipe-like. The electrode (sublayer) may have well-developed surface roughness, porosity of 0 to 35% and a pore size of less than 1 µm.
   Example 6.1. Method of fabricating a pair of a 50% NiO - 50% 3YSZ anode with a 50% NiO - 50% 3YSZ sublayer and a dense 3YSZ electrolyte layer.

The cathode has a porosity of 35% and an average pore size of less than 1 µm.

The sublayer thickness is 10 µm.

The electrolyte is produced by thermal destruction. The deposition is performed in at least one stage.

The dense 3YSZ electrolyte layer is produced using a solution of a mixture of zirconium and yttrium carboxylates in toluene with a total zirconium and yttrium concentration of 0.5 mole/I, their molar ratio being 94 mole% Zr - 6 mole% Y.

The solution is deposited onto the cold surface by printing, following which the anode is air heated at atmospheric pressure to 300 °C. Under these conditions, the anode sublayer surface pores are impregnated to a depth of 3 - 5 µm. Destruction of the organic part of the solution produces a dense amorphous surface 3YSZ layer penetrating into the sublayer to 3 - 5 µm, the layer thickness on the surface being less than 1 µm. If the 3YSZ layer thickness should be increased, the deposition and destruction cycle is repeated.

The final annealing at 1000 °C produces tetragonal zirconium dioxide with a density of 99.8% of the theoretical one and a grain size of 30 - 40 nm.

Example 6.2. Method of fabricating a pair of a metallic anode with a nanoporous scandium stabilized 50% NiO - 50% ZrO₂ sublayer and a dense scandium stabilized zirconium dioxide (ScSZ) electrolyte layer.

The cathode has a porosity of 30% and an average pore size of less than 1 µm.

The sublayer thickness is 50 µm.

The electrolyte is produced by solution deposition with simultaneous thermal destruction.

The dense ScSZ electrolyte sublayer is produced using a solution of a mixture of zirconium and scandium carboxylates with an excessive quantity of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250, the total zirconium and scandium concentration being 1 mole/l, and their ratio being stoichiometric.

The solution is deposited onto the surface heated to 400 °C by multiple printing at atmospheric pressure in an argon atmosphere. Under these conditions (during the first deposition cycle), the anode sublayer surface pores are impregnated to a depth of 1 - 2 µm with further increase of the ScSZ electrolyte layer. Each cycle is 1 minute long.

This technology produces a dense amorphous surface ScSZ layer penetrating into the sublayer to 1 - 2 µm, the layer thickness on the surface being 1 to 15 µm.

The final annealing at 800 °C produces cubic zirconium dioxide with a density of 99.5% of the theoretical one and a grain size of 10 -15 nm.

Example 6.3. Method of fabricating a pair of a La _{0.6} Sr _{0.4}CoO₃ cathode with a La _{0.6} Sr _{0.4}CoO₃ sublayer and a dense 8YSZ electrolyte layer.

The cathode has a porosity of 35% and an average pore size of less than 1 µm.

The sublayer thickness is 5 µm.

The electrolyte is produced by thermal destruction. The deposition is performed in at least one stage.

The dense 8YSZ electrolyte layer is produced using a solution of a mixture of zirconium and yttrium carboxylates in toluene with a total zirconium and yttrium concentration of 0.1 mole/l, their molar ratio being 84 mole% Zr - 16 mole% Y.

The solution is deposited onto the cold surface by spraying, following which the cathode is air heated at atmospheric pressure to 300 °C. Under these conditions, the cathode sublayer surface pores are impregnated to a depth of up to 5 µm. Destruction of the organic part of the solution produces a dense amorphous surface 8YSZ layer penetrating into the sublayer to the full sublayer depth, the layer thickness on the surface being 0.3 µm. If the 8YSZ layer thickness should be increased, the deposition and destruction cycle is repeated.

The final annealing at 600 °C produces tetragonal zirconium dioxide with a density of 99.8% of the theoretical one and a grain size of 3 - 8 nm.

## Claims

1. Electrode-electrolyte pair comprising a microporous electrode to the surface of which is deposited a multilayered solid electrolyte based on zirconium dioxide with stabilizing additions, the solid electrolyte consisting of the inner nanoporous three-dimensional solid electrolyte layer with a grain size of within 1000 nm which fills, at least partially, the surface pores of the microporous electrode to a depth of 5 - 50 µm, and a dense outer electrode layer with a grain size of within 1000 nm located on the surface of said inner layer.

2. Electrode-electrolyte pair according to Claim 1, wherein said inner and outer electrolyte layers have similar or different compositions.

3. Electrode-electrolyte pair according to Claim 1, wherein said inner electrolyte layer has a combined amorphous and nanocrystalline structure.

4. Electrode-electrolyte pair according to Claim 1, wherein said outer electrolyte layer has an amorphous structure.

5. Electrode-electrolyte pair according to Claim 1, wherein said stabilizing additions are magnesium and/or calcium and/or yttrium and/or scandium and/or aluminum and/or rare earth metals and/or titanium.

6. Electrode-electrolyte pair according to Claim 1, wherein said electrode is made of a microporous ceramic or metallic or metalloceramic material with pore sizes of above 1 µm.

7. Electrode-electrolyte pair according to Claims 1 or 6, wherein said electrode is a cathode or anode of flat or pipe-like shape.

8. Electrode-electrolyte pair according to Claim 7, wherein said anode is made of a porous metallic material consisting of nickel and/or cobalt and/or their alloys.

9. Electrode-electrolyte pair according to Claim 7, wherein said anode is made of a volume mesh or a foam material.

10. Electrode-electrolyte pair fabrication method comprising the formation, on the microporous electrode surface, of a partially electrode-penetrating multilayered solid electrolyte based on zirconium dioxide with stabilizing additions, to which end the microporous electrode surface is initially impregnated with organogel consisting of particles of zirconium dioxide with stabilizing additions and an organic solution containing organic salts of zirconium and the stabilizing metals, and destruction of the organogel organic part that leads to the chemical deposition of the inner nanoporous three-dimensional solid electrolyte layer on the electrode surface, following which the inner organogel layer is deposited onto the surface, said layer consisting of nanosized particles of zirconium dioxide with stabilizing additions and an organic solution containing organic salts of zirconium and the stabilizing metals, and destruction of the organogel organic part that leads to the chemical deposition of the dense outer layer of the multilayered electrolyte onto the inner layer surface.

11. Method according to Claim 10, wherein said inner and outer electrolyte layers are produced using organogel of similar or different compositions.

12. Method according to Claim 10, wherein said stabilizing additions are magnesium and/or calcium and/or yttrium and/or scandium and/or aluminum and/or rare earth metals and/or titanium.

13. Method according to Claim 10, wherein the impregnation of said porous electrode surface with organogel is performed in vacuum of by mechanical pressing the organogel into the porous electrode surface.

14. Method according to Claim 10, wherein said destruction is performed by high-energy impact that causes the decomposition of the organic part of the organogel, e.g. thermal, induction or infrared heating, or electron or laser beam impact or plasmachemical impact.

15. Method according to Claim 14, wherein said organogel destruction is performed with high-rate pyrolysis at temperatures within 800°C in an oxidizing, inert or weakly reducing gas atmosphere.

16. Method according to Claim 10, wherein organogel organic part destruction is performed simultaneously or sequentially with the impregnation or organogel deposition onto the inner layer surface.

17. Method according to Claim 16, wherein during organogel impregnation of the electrode or organogel deposition to the inner layer surface with simultaneous destruction, the organogel is deposited to the surface to be coated by spraying or printing.

18. Method according to Claim 14, wherein during organogel impregnation of the electrode or organogel deposition to the inner layer surface with subsequent destruction, the organogel is deposited to the cold surface of the electrode or the inner layer with subsequent high-rate heating of the electrode.

19. Method according to Claim 10, wherein organogel impregnation of the electrode or organogel deposition to the inner layer surface and organogel destruction are performed in one or multiple stages.

20. Organogel used for the fabrication of the electrode-electrolyte pair contains nanosized particles of zirconium dioxide with stabilizing additions and an organic solution containing organic salts of zirconium and the stabilizing metals, a mixture of branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250.

21. Organogel according to Claim 20, wherein said stabilizing additions are magnesium and/or calcium and/or yttrium and/or scandium and/or aluminum and/or rare earth metals and/or titanium.

22. Organogel according to Claim 20, wherein said organic solvent is carbonic acid and/or any organic solvent of carbonic acid metal salts.

23. Organogel according to Claim 20, wherein said organogel contains nanosized particles 3 to 100 nm in size.

24. Organogel according to Claim 20, wherein the concentration of stabilizing additions in zirconium and metal salts in the organogel is selected at 0.05 to 1 mole/l in a ratio corresponding to the electrolyte stoichiometric composition.

25. Organogel according to Claim 20, wherein the volume ratio of the nanosized particles in the organogel is within 85%.

26. Electrode-electrolyte pair comprising a nanoporous electrode to the surface of which is deposited a layer or dense three-dimensioned electrolyte based on zirconium dioxide with stabilizing additions the grain size of which is within 1000 nm, the electrolyte filling the surface pores of the nanoporous electrode to a depth of 1 - 5 µm.

27. Electrode-electrolyte pair according to Claim 26, wherein said electrolyte has an amorphous structure.

28. Electrode-electrolyte pair according to Claim 26, wherein said stabilizing additions are magnesium and/or calcium and/or yttrium and/or scandium and/or aluminum and/or rare earth metals and/or titanium.

29. Electrode-electrolyte pair according to Claim 26, wherein said electrode is in a microporous ceramic or metallic or metalloceramic material with pore sizes, at least near the surface, of within 1 µm.

30. Electrode-electrolyte pair according to Claim 26, wherein said electrode is an anode or cathode with a flat or pipe-like shape.

31. Electrode-electrolyte pair according to Claim 30, wherein said anode is made of a porous metallic material consisting of nickel and/or cobalt and/or their alloys.

32. Electrode-electrolyte pair fabrication method comprising the formation, on the microporous electrode surface, of a dense three-dimensional solid electrolyte layer based on zirconium dioxide with stabilizing additions, for which end the nanoporous electrode surface is initially impregnated with an organic solution containing organic salts of zirconium and the stabilizing metals, a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250, and destruction of the organogel organic part that leads to the chemical deposition of the solid electrolyte on the electrode surface.

33. Method according to Claim 32, wherein said stabilizing additions are magnesium and/or calcium and/or yttrium and/or scandium and/or aluminum and/or rare earth metals and/or titanium.

34. Method according to Claim 32, wherein said organic solvent is carbonic acid or toluene or octanol or any organic solvent of carbonic acid metal salts.

35. Method according to Claim 32, wherein said destruction is performed by high-energy impact that causes the decomposition of the organic part of the organogel, e.g. thermal, induction or infrared heating, or electron or laser beam impact or plasmachemical impact.

36. Method according to Claim 35, wherein said organogel destruction is performed with high-rate pyrolysis at temperatures within 800°C in an oxidizing, inert or weakly reducing gas atmosphere.

37. Method according to Claim 32, wherein said organogel organic part destruction is performed simultaneously or sequentially with impregnation.

38. Method according to Claim 37, wherein during electrode impregnation with simultaneous destruction, the solution is deposited to the surface to be coated by spraying or printing.

39. Method according to Claim 37, wherein during electrode impregnation with subsequent destruction, the solution is deposited to the cold surface of the electrode with subsequent high-rate heating of the electrode.

40. Method according to Claim 32, wherein the concentration of stabilizing additions is selected at 0.05 to 1 mole/l in a ratio corresponding to the electrolyte stoichiometric composition.

41. Organogel according to Claim 32, wherein said solution is deposited onto the electrode surface and destruction in one or multiple stages.
